# EUROPEAN PATENT SPECIFICATION

(11) **EP 3 893 028 B1**
(45) Date of publication and mention of the grant of the patent: **04.06.2025**
(21) Application number: 20168534.4
(22) Date of filing: 07.04.2020
(51) Int. Cl.: G01V 5/00

(54) **METHOD FOR SECURITY INSPECTION AND KIT OF PARTS WITH A DETACHABLE SINGLE-USE INLAY FOR AN X-RAY TRAY**
VERFAHREN ZUR SICHERHEITSINSPEKTION UND KIT VON TEILEN MIT EINER ABNEHMBAREN EINWEGEINLAGE FÜR EIN RÖNTGEN-TRAY
PROCÉDÉ D'INSPECTION DE SÉCURITÉ ET KIT DE PIÈCES AVEC INCRUSTATION À USAGE UNIQUE DÉTACHABLE DESTINÉE À UN PLATEAU À RAYONS X

(43) Date of publication of application: 13.10.2021
(73) Proprietor: González Marín, Saray, 65719 Hofheim am Taunus (DE); Melz, Eckhard Edelbert, 65719 Hofheim am Taunus (DE)
(72) Inventor: González Marín, Saray, 65719 Hofheim am Taunus (DE); Melz, Eckhard Edelbert, 65719 Hofheim am Taunus (DE)
(74) Representative: Metten, Karl-Heinz

(56) References cited:
- US-A1- 2012 074 149
- ZHICHAO HU ET AL: "Luminescent metal-organic frameworks for chemical sensing and explosive detection", CHEMICAL SOCIETY REVIEWS, vol. 43, no. 16, 1 January 2014 (2014-01-01), UK, pages 5815 - 5840, XP055727612, ISSN: 0306-0012, DOI: 10.1039/C4CS00010B
- LAUREN E. KRENO ET AL: "Metal-Organic Framework Materials as Chemical Sensors", CHEMICAL REVIEWS, vol. 112, no. 2, 8 February 2012 (2012-02-08), pages 1105 - 1125, XP055208158, ISSN: 0009-2665, DOI: 10.1021/cr200324t

## Description

This disclosure relates to a method for security inspection of baggage and/or personal items, in particular to prevent the transfer of pathogenic agents from an X-ray tray to baggage and/or personal items and to a method for security inspection of baggage and/or personal items to prevent the illicit transport of explosives and/or drugs. This disclosure also relates to a kit of parts with a detachable single-use inlay comprising a paper and/or polymer layer and an X-ray tray of a security check, e.g. at an airport. In addition this disclosure relates to a kit of parts with a detachable single-use inlay with a paper and/or polymer layer and a second layer comprising metal organic frameworks and an X-ray tray. It also relates to sheet material, in particular a single-use inlay as such. Furthermore, this disclosure relates to a use of said kits of parts and to said sheet material, in particular single-use inlays for the prevention of transfer of pathogenic agents and/or detection of illicit transport of explosives and/or drugs or the like.

The dangers of pathogenic agents are well known in the art. Airports and railway stations are hubs for spreading various kinds of diseases as many passengers from different locations come in close contact in one place. Passengers usually transfer pathogenic agents directly by person-to-person contact and droplet spread or indirectly by contact with contaminated objects.

WO 2015 041 619 A1 relates to the prevention of the mass spread of infectious microbes at baggage conveyors available in public areas by applying an antibacterial cast and solvent foil on the surfaces of baggage conveyor belts.

US 2012/0074149 A1 relates to an hygienic system for use at airports, comprising a) a security tray into which passenger articles can be temporarily placed; and b) an hygienic cover for the tray made of a cleanable material provided with a plurality of rectilinear score or fold lines which, when folded, closely approximate all interior dimensions of the rectangular tray and the dimensions of the peripheral edges, and which is slip-fittable into said tray. In this manner, the handling of security containers at airports should be more hygienic.

In the review article "Metal-Organic Framework Materials as Chemical Sensors" in Chem. Rev., Vol. 112, No. 2, February 08, 2012, pages 1105 to 1125, L.E. Kreno et al. describe the properties of so-called metal-organic frameworks (MOFs). And, the review article "Luminescent metal-organic frameworks for chemical sensing and explosive detection" by Zhichao Hu et al. in Chem. Soc. Rev., Vol. 43, No. 16, January 01, 2014, pages 5815 to 5840, focuses in particular on the photoluminescence properties of MOFs and their potential use for chemical and biological sensing and detection.

Other common measures to avoid a transfer of pathogenic agents include washing hands, wearing gloves or other protection equipment, and regularly wiping surfaces. It was found that some of these measures are difficult to implement during travel and others are not as effective as intended.

The present invention aims at decreasing the danger of spreading diseases at airports or other public or private facilities. One object is to provide improved methods and an improved kit of parts for preventing an indirect transfer of pathogenic agents. It is another object to provide methods and a kit of parts that allow a high throughput of passengers in spite of said countermeasures to prevent spreading of pathogenic agents, i.e., said countermeasures are practicable without significant loss of time.

Another major problem at airports or other public places is the smuggling of prohibited drugs, including narcotics, especially hidden in luggage. Currently, if drug smuggling is suspected, the baggage has to be checked individually by an airport employee, which is very time consuming. Another method for detecting drugs is the use of drug sniffing dogs, although they are still used too little to be able to check the huge amount of baggage at the airport.

The risk of transporting explosives at airports or other public places such as railway stations or trade fairs is also a known problem. The closure of these public places when lost luggage is found, due to the potential danger of containing explosives, regularly paralyses air or rail traffic for several hours. At present, there is also no fast, effective method for the early detection of explosives that does not endanger the lives of people or explosive detection dogs.

The present invention relates to a method for security inspection of baggage and/or personal items according to claim 1. Said method comprises the steps of:
a. providing an X-ray tray having a deposition area;
b. attaching an, in particular unused, single-use inlay to said X-ray tray to cover said deposition area, said single-use inlay comprising a paper and/or polymer layer having an outer side and an inner side, in particular wherein the paper and/or polymer layer has an essentially circumferential fringe area adapted to grasp and/or cover the edges of said X-ray tray, wherein the inlay comprises metal organic framework (MOF) material, in particular on said outer side and/or on said inner side, in particular on said outer side,
c. putting the baggage and/or personal items onto the single-use inlay, in particular without direct contact to the X-ray tray;
d. X-ray scanning said baggage and/or personal items disposed in said X-ray tray, in particular wherein the X-ray tray is moved by at least one belt conveyor into and out of the scanning area and/or inspecting the inlay, e.g. as to changes in appearance, in particular for preventing the transport of compounds such as explosives and/or drugs;
e. removing the baggage and/or personal items from said single-use inlay; and
f. detaching said single-use inlay from said X-ray tray,
wherein said metal organic framework (MOF) material is selected from the group consisting of [Zn₂(bpdc)₂(bpee)], [Zn(dcbpy)(DMF)]·DMF, [Zn₄O(cpi)₂(H₂0)₃] 3DMA·3EtOH·6H₂0, Zn₃(ccmpb)₂(bib), [Zn₃(tdpat)(H₂0)₃], Zn₃(btc)₂, [Zn₂(fdc)₂(bpee)₂(H₂0)]ₙ·2H₂0, [Zn₃(bpdc)₃(bpy)] 4DMF·H₂0, [Zn₂(hfdc)₂(bpy) xDMA], [(CH₃)NH₂]₄[Cd₃(H₂phhc)], [Cd₂(tipb)₂(btc)Cl], [Cd(tipb)(tdc)], [Cd(tipb)(fdc)], [Cd₃(ttpb)₂(H₂0)₆] 6DMF, [Tb(1,3,5-btc)]ₙ, [Tb(hbttc)(H₂0)₄] H₂0, [Eu₂(mfda)₂(HCOO)₂(H₂0)₆·H₂0], Eu₃(mfda)₄(NO₃)(DMF)₃, Fe-MIL-88B-NH₂, [Cu(adp)(BIB)H₂0]ₙ, MIL-53-Cr, [Co(pbda)(bpy) 2H₂0]ₙ and mixtures thereof, in particular [Zn₂(bpdc)₂(bpee)] and/or Fe-MIL-88B-NH_{2.}

In step d. inspecting the inlay is in particular used to prevent the transport of explosives or other hazardous compound, chemical agents, toxins and/or drugs. According to some embodiments of the method the paper and/or polymer layer, in particular the elastic polymer layer, is secured to the X-ray tray by stretching it over an, in particular protruding, edge of said X-ray tray, wherein said paper and/or polymer layer preferably contracts at or below said edge, in particular on an exterior side of the X-ray tray.

According to another embodiment the method for security inspection according to the present invention is also characterized in that at least one metal organic framework (MOF) is provided on said outer side and/or on said inner side, in particular on said inner side, adapted and arranged to detect at least one explosive or any other hazardous compound and/or wherein at least one metal organic framework (MOF) is provided on said outer side and/or on said inner side adapted and arranged to detect at least one drug, in particular cocaine, heroin, cannabis, or the like. In the meaning of the present invention, the term "metal-organic framework" (MOF) preferably refers to a one, two, or three dimensional polymer including both organic and metal or metal oxide structural units, where at least one of the metal units is bonded to least one bi-, tri- or poly-dentate organic unit. In accordance with principles of the present invention, metal organic frameworks can be used as sorbents to detect various chemical substances and/or their precursors. Preferred metal organic framework materials comprise [Zn₂(bpde)₂(bpee)] (bpdc=4,4'-biphenyldicarboxylate; bpee=1,2-bipyridylethene) and/or Fe-MIL-88B-NH₂, wherein [Zn₂(bpde)₂(bpee)] is particularly preferred. The compound Fe-MIL-88B-NH₂ is, for example, described in Electronic Supporting Information for cg-2012-01738p, "Iron-based Metal-Organic Frameworks MIL-88B and NH2-MIL-88B: High Quality Microwave Synthesis and Solvent-induced Lattice "Breathing"", Mingyan Ma, Angélique Bétard, Irene Weber, Roland A. Fischer, Nils Metzler-Nolte, Faculty of Chemistry and Biochemistry, Inorganic Chemistry, Ruhr-University Bochum, Universitätsstraße 150, 44801 Bochum, Germany.

In this regard it has been found advantageous that the at least one metal organic framework is provided on said outer side and/or on said inner side by way of printing, in particular using a transparent dye. Alternatively, said paper and/or polymer layer is provided on its outer side and/or on its inner side, in particular on its inner side, with another layer, in particular polymer layer, comprising at least one metal organic framework. According to another embodiment said paper and/or polymer layer is provided on its outer side and/or on its inner side, in particular on its inner side, with an, in particular transparent, coating comprising at least one metal organic framework. According to another alternative said paper and/or polymer layer can also be provided on its outer side and/or on its inner side, in particular on its inner side, with an, in particular transparent, sticker comprising at least one metal organic framework.

According to a further embodiment, the at least one metal organic framework is adapted and arranged to provide a color signal under visible, UV or IR light once it has captured an explosive, any other hazardous compound or a drug. Thus, in some embodiments of the kit of parts the MOF layer changes its colour, in particular under UV light, as soon as coming into contact with explosives and/or drugs or their deposition materials. The intoxicants or drugs or explosives release characteristic volatile substances, for example VOCs, into the ambient air. The MOFS are inlaid and aligned to absorb these volatile substances into their coarse-meshed framework and, if necessary, to complex them thereby allowing for a colour change.

The at least one metal organic framework (MOF) material in another preferred embodiment is a luminescent metal organic framework (LMOF) material.

The metal organic framework (MOF) material of the present invention is particularly arranged and adapted for the detection of NO₂-containing explosives or peroxide based explosives, in particular TATB. The NO₂-containing explosive can for example be selected from the group consisting of TNT, DNT, RDX, PETN, DMNP, HMX and nitrocellulose.

Hereinafter a kit of parts is described. Although various combinations of single-use inlays and X-ray trays are in principle suitable for the above described method, in various embodiments of the method in step b. the detachable single-use inlay and the X-ray tray is a kit of parts and/or single-use inlay as described hereinafter.

Accordingly, the present invention is directed as well to a sheet material, in particular a detachable, single-use inlay, suitable for being placed in an X-ray tray, according to claim 15.

Accordingly, the present invention is directed as well to a kit of parts according to Claim 18. Said kit of parts comprises a detachable single-use inlay and an X-ray tray, in particular an X-ray tray adapted for a security check at an airport or other public or private facility,
the detachable single-use inlay comprising an, in particular flexible, paper and/or polymer layer having an outer side and an inner side,
wherein at least one metal organic framework (MOF) material is provided on said outer side and/or on said inner side, in particular on said outer side, wherein said metal organic framework (MOF) material is selected from the group consisting of [Zn₂(bpdc)₂(bpee)], [Zn(dcbpy)(DMF)]·DMF, [Zn₄O(cpi)₂(H₂0)₃] 3DMA·3EtOH·6H₂0, Zn₃(ccmpb)₂(bib), [Zn₃(tdpat)(H₂0)₃], Zn₃(btc)₂, [Zn₂(fdc)₂(bpee)₂(H₂0)]ₙ·2H₂0, [Zn₃(bpdc)₃(bpy)] 4DMF·H₂0, [Zn₂(hfdc)₂(bpy) xDMA], [(CH₃)NH₂]₄[Cd₃(H₂phhc)], [Cd₂(tipb)₂(btc)Cl], [Cd(tipb)(tdc)], [Cd(tipb)(fdc)], [Cd₃(ttpb)₂(H₂0)₆] 6DMF, [Tb(1,3,5-btc)]ₙ, [Tb(hbttc)(H₂0)₄] H₂0, [Eu₂(mfda)₂(HCOO)₂(H₂0)₆·H₂0], Eu₃(mfda)₄(NO₃)(DMF)₃, Fe-MIL-88B-NH₂, [Cu(adp)(BIB)H₂0]ₙ, MIL-53-Cr, [Co(pbda)(bpy) 2H₂0]ₙ and mixtures thereof. Particularly preferred metal organic framework materials comprise [Zn₂(bpdc)₂(bpee)], Fe-MIL-88B-NH₂ or mixtures thereof.

In accordance with various embodiments of the present invention said kit of parts comprises a detachable single-use inlay and an X-ray tray, in particular an X-ray tray adapted for a security check at an airport or other public facility or at an private facility, the detachable single-use inlay comprising an, in particular flexible, paper and/or polymer layer having an outer side and an inner side, in particular wherein the paper and/or polymer layer has an essentially circumferential fringe area adapted to grasp and/or cover the edges of said X-ray tray.

According to some embodiments the detachable single-use inlay comprises a protective cover and has a compressed state in which the paper and/or polymer layer is compressed, in particular folded, within said protective cover, and a decompressed state, in which the paper and/or polymer layer is decompressed, in particular unfolded.

According to some embodiments in the compressed state the length and width of the single-use inlay is reduced by at least 50%, in particular by at least 75%, preferably by at least 90%, and/or in the compressed state the length and width of the single-use inlay is smaller than 10 cm, preferably smaller than 5 cm.

According to some embodiments the paper and/or polymer layer is a non-adhesive detachable layer that is attachable by stretching said essentially circumferential fringe area over the edges of said X-ray tray.

According to some embodiments the paper and/or polymer layer is watertight.

According to some embodiments the sheet material or inlay is or comprises a polymer layer, e.g. a polymer foil, in particular made of polyethylene or polypropylene, preferably chlorinated polyethylene or chlorinated polypropylene.

According to some preferred embodiments the paper and/or polymer layer has an average material strength of 10 to 200 µm, preferably an average material strength of 20 to 100 µm, particularly preferred an average material strength of 30 to 70 µm.

According to some embodiments the essentially circumferential fringe area comprises an elastic band.

According to some preferred embodiments the paper and/or polymer layer is coated on the outer and/or inner side with an antibacterial composition and/or an antibacterial composition is part of the material of the paper and/or polymer layer.

According to some embodiments the paper and/or polymer layer is transparent for X-rays and/or visible light.

The disclosure also relates to a sheet material, in particular single-use inlay as described above that is adapted for an X-ray tray, in particular an X-ray tray as described for the kit of parts.

Said sheet material, in particular said inlay, which is preferably suitable for being placed in an X-ray tray, in particular a detachable single-use inlay, comprises, in particular on one or both of its sides, a metal organic framework (MOF) material selected from the group consisting of [Zn₂(bpdc)₂(bpee)], [Zn(dcbpy)(DMF)]·DMF, [Zn₄O(cpi)₂(H₂0)₃] 3DMA·3EtOH·6H₂0, Zn₃(ccmpb)₂(bib), [Zn₃(tdpat)(H₂0)₃], Zn₃(btc)₂, [Zn₂(fdc)₂(bpee)₂(H₂0)]ₙ·2H₂0, [Zn₃(bpdc)₃(bpy)] 4DMF·H₂0, [Zn₂(hfdc)₂(bpy) xDMA], [(CH₃)NH₂]₄[Cd₃(H₂phhc)], [Cd₂(tipb)₂(btc)Cl], [Cd(tipb)(tdc)], [Cd(tipb)(fdc)], [Cd₃(ttpb)₂(H₂0)₆] 6DMF, [Tb(1,3,5-btc)]ₙ, [Tb(hbttc)(H₂0)₄] H₂0, [Eu₂(mfda)₂(HCOO)₂(H₂0)₆·H₂0], Eu₃(mfda)₄(NO₃)(DMF)₃, Fe-MIL-88B-NH₂, [Cu(adp)(BIB)H₂0]ₙ, MIL-53-Cr, [Co(pbda)(bpy) 2H₂0]ₙ and mixtures thereof.

Preferably, the metal organic framework (MOF) material to be used with the inlay according to the invention is [Zn₂(bpdc)₂(bpee)] and/or Fe-MIL-88B-NH₂
The disclosure also relates to a use of said kit of parts and/or said sheet material, in particular single-use inlay, according to claim 25 to prevent the transfer of pathogenic agents from an X-ray tray of a security check to baggage and/or personal items.

Some embodiments relate to the use of said kit of parts and/or single-use inlay during X-ray screening in an airport of baggage and/or personal items disposed in the X-ray tray on the single-use inlay.

Security checks are known in the art, e.g. from airports or when entering a building that contains sensitive information. Often security checks comprise a narrow passage where passengers are scanned. Baggage and/or personal items are usually scanned separately, e. g. using an X-ray scanner of comparatively high intensity. The security check may be a security gate for checking baggage and/or personal items in search for weapons, drugs, bombs or other prohibited items using said X-ray scanner. The present invention helps in preventing a transmission of pathogenic agents in this specific field from an X-ray tray to baggage and/or personal items and also from baggage and/or personal items to an X-ray tray.

It was found that with the above described single-use inlay, a transfer from bacteria from the X-ray tray commonly used at security checks can be prevented. Said X-ray trays are provided to dispose baggage and/or personal items therein when they are transported, e.g. on a conveyor belt, and scanned using X-ray based scanning machines. Said X-ray trays are touched by hundreds if not thousands of passengers. Shoes are put into said X-ray trays and have pathogenic agents attached to the shoe soles. Multiple personal items, such as used handkerchiefs, money, belts, jackets, tablets, laptops and watches are disposed in said X-ray trays. The result is that said X-ray trays may inevitably be heavily contaminated with pathogenic agents. The detachable single-use inlay may be used to prevent a transfer of pathogenic agents from the X-ray trays to baggage and/or personal items or vice versa. An X-ray tray in accordance with this disclosure relates to a tray for baggage and/or personal items that is used for transporting said baggage and/or personal items through an X-ray based scanning machine, i.e., a tray adapted for the X-ray based scanning process. Often a plastic tray of suitable size is made use of. Trays made solely out of metal often cannot be used as they may prevent X-ray detection of dangerous items within baggage or dangerous personal items using said X-ray based scanning machine.

In some embodiments of the method the paper and/or polymer layer is secured to the X-ray tray by stretching it over an, in particular protruding, edge of said X-ray tray, wherein the paper and/or polymer layer preferably contracts at or below said edge, in particular on an exterior side of the X-ray tray. The X-ray tray may be any kind of transport tray suitable for transporting baggage and/or personal items through a X-ray baggage scanner, in particular a plastic transport tray of suitable size for baggage.

In some embodiments the method of the present invention is a method for security inspection of passenger's baggage and/or personal items at an airport. It may also be a method for security inspection at an entrance of a school, courthouse, football stadium, soccer stadium, railway station or any other public buildings or areas that may require enhanced security, in particular where there is an increased danger of terrorist attacks and/or where large groups of people come together. It may also be implemented at private facilities, in particular private facilities which are not accessible to the general public.

In some embodiments of the method after disposing of the single-use inlay the method comprises the step of crushing, melting and/or shredding of the single-use inlay, in particular wherein the material of the single-use inlay is recycled.

In some embodiments the method step e. can include that a security office checks the baggage manually prior to removing said baggage and/or personal items from said single-use inlay. Preferably the inlay stay connected to said x-ray tray during this checking. It is also possible that the baggage and/or personal items is scanned a second time prior to removing said baggage and/or personal items.

In some embodiments of the kit of parts the entire single-use inlay consists of one single material. Said material may be one of the polymers discussed in this disclosure. It may also be a paper material.

In some embodiments of the kit of parts the single-use inlay may comprise an imprint, such as a trade mark of a producer or a logo.

In some embodiments of the kit of parts in the compressed state the paper and/or polymer layer is vacuum-packed within the protective cover. This reduces the amount of contamination within the protective cover. Many pathogenic agents need air and/or water to survive and remain infective. Also if the protective cover is opened or a seal of the protective cover is broken, air enters and the vacuum is destroyed. This can be visibly observed by an expansion of the single-use inlay and the surrounding protective cover. The user gets a warning if the single-use inlay is not safe to use any more due to possible contamination of the inner side said single-use inlay.

In some embodiments of the kit of parts in the compressed state the paper and/or polymer layer is contained in a gastight protective cover. Said gastight protective cover may be used to maintain a vacuum. However, it is also possible to use a gas, e.g. an inert gas or purified pathogen free air, to prevent any contamination of the interior of the protective cover, i.e., of the single-use inlay within the protective cover.

In some embodiments of the kit of parts the paper and/or polymer layer is a non-adhesive detachable layer that is attachable by stretching said essentially circumferential fringe area over the edges of said X-ray tray. It was found that this provides a quick and secure attachment. If the attachment is not sufficiently secure there is a danger that the protective cover will detach and the interior may be contaminated by pathogenic agents on the surface of the X-ray tray. Also this way of attachment usually can be applied very fast. At security checks a high number of people have to be processed and the transfer of baggage and/or personal items within X-ray trays is a bottleneck for the numbers of people that are checked per minute. It is in some situations crucial that the single-use inlay can be applied as fast as possible, i.e., within a few seconds. A similar principle is known from bed sheets, where fitted sheets can be applied faster than regular sheets.

In some embodiments of the kit of parts the paper and/or polymer layer is a non-textile layer. It may be that the paper and/or polymer layer is a paper layer. Said paper layer may have a thickness of less than 100 µm. Also a polymer layer is possible. Said polymer layer may be an elastic layer. It may also have a thickness of less than 100 µm.

In some embodiments of the kit of parts the paper and/or polymer layer is watertight. This prevents a transfer of contaminated liquid form the X-ray tray to the baggage and/or personal items disposed on the single-use inlay.

In some embodiments of the kit of parts the single-use inlay has an opening. The shape of said opening may be defined by the essentially circumferential fringe area. The opening may be elastic and in some embodiments can change its size to fit over a circumferential edge of said X-ray tray.

In some embodiments of the kit of parts the single-use inlay may clutch the X-ray tray due to its elastic properties, in particular due to an elastic band and/or an elastic paper and/or polymer layer.

The X-ray trays may in some embodiments have a width of 30 to 50 cm and a length of 40 to 6o cm, wherein the length is preferably at least 5 to 10 cm larger than the width. In some embodiments the height is 6 to 20 cm, in particular 7,5 to 15 cm. The single-use inlay may be adapted to fit multiple sizes, in particular the aforementioned dimensions.

The X-ray tray may contain an RFID card.

The X-ray tray may be injection-molded.

The X-ray tray may consist to at least 90% (w/w), in particular to at least 95% (w/w), of a polymer composition. In some embodiments polypropylene is a preferred material for said X-ray tray.

In some embodiments of the kit of parts the sheet material or inlay is or comprises a polymer layer, e.g. a polymer foil, in particular made of polyethylene or polypropylene, preferably chlorinated polyethylene or chlorinated polypropylene.

In some embodiments of the kit of parts the single-use inlay may have a total weight of less than 100 g, in particular less than 25 g, preferably less than 10 g. It was found that very little material is required for a sufficient protection barrier.

In some embodiments of the kit of parts the paper and/or polymer layer may have an average material strength of 10 to 200 µm, preferably of 20 to 100 µm, particularly preferred of 30 to 70 µm.

In some embodiments of the kit of parts the essentially circumferential fringe area comprises an elastic band. The elastic band may comprise the same material as the polymer layer. It also may be made from latex or any other suitable material. Said elastic band may be used to ensure a tight grasp at or below the edges of the X-ray tray.

In some embodiments of the kit of parts the paper and/or polymer layer is coated on the outer and/or inner side, in particular on the inner side, with an antibacterial composition and/or an antibacterial composition is part of the material of the paper and/or polymer layer.

In some embodiments the paper and/or polymer layer may be transparent for X-rays. A transparency for X-ray helps in recognizing and scanning of baggage and/or personal items within the single-use inlay.

Alternatively or additionally the paper and/or polymer layer may the transparent for visible light. This helps a security office to verify that no hidden objects are arranged below the single-use inlay.

In some embodiments of the kit of parts the single-use inlay or the sheet material of the present invention is made of at least 90 % (w/w), in particular of at least 95% % (w/w), of a flexible film material, in particular the polymer or/paper layer. It may be that the single-use inlay is made of at least 90 % (w/w), in particular of at least 95% % (w/w), of said polymer film, wherein the polymer film is a flexible polymer film. It may also be that the single-use inlay is made up entirely from said flexible film material, in particular said polymer and/or paper layer.

Various embodiments of the kit of parts were described above. However, the disclosure also relates to a sheet material, in particular single-use inlay, as described above as such, i. e. without the X-ray tray as comprised in said kit of parts. The present invention relates to a detachable single-use inlay for an X-ray tray of a security check at an airport or other public facility, comprising an, in particular flexible, paper and/or polymer layer having an outer side and an inner side, wherein the paper and/or polymer layer has an essentially circumferential fringe area adapted to grasp and/or cover the edges of said X-ray tray. Said sheet material or single-use inlays may be provided in packages of 50 to 10 000 units, e.g. transport boxes, wherein said boxes have an oval, rectangular or circular opening in at least one side through which the single-use inlays may be removed.

The present invention also relates to the use of a single-use inlay as described above to prevent the transfer of pathogenic agents from an X-ray tray of a security check to baggage and/or personal items and/or to detect explosives, other hazardous compounds, chemical agents or toxines and/or drugs by use of a sheet material or inlay comprising said metal organic framework materials specified herein.

With the above-described embodiments of the kit of parts according to the present invention for detecting the illicit transport of explosives, other hazardous compounds and/or drugs can already be detected when baggage and/or personal items are placed on a detachable single-use inlay placed on an X-ray tray, in particular an X-ray tray adapted for a security check at an airport or other public or private facility.

The disclosure also relates to the use of a single-use inlay as described above to during X-ray screening in an airport of baggage and/or personal items disposed in the X-ray tray on the single-use inlay, in particular when used to prevent the transfer of pathogenic agents from an X-ray tray of a security check to baggage and/or personal items and to prevent the illicit transport of explosives and/or drugs.

In the figures:
- Figure 1: shows a schematic top down view of a a security check at an airport;
- Figure 2: shows a user who applies the detachable single-use inlay at a security check;
- Figure 3: shows a perspective view of an X-ray tray as used at a security check at an airport;
- Figure 4: shows a perspective view of an embodiment of a detachable single-use inlay;
- Figure 5: shows a schematic view of another embodiment of a detachable single-use inlay;
- Figure 6: shows a schematic view of a detachable single-use inlay with a paper layer and a MOF layer;
- Figure 7: shows a schematic view of another embodiment of a detachable single-use inlay;
- Figure 8: shows a perspective view of an embodiment of a detachable single-use inlay attached to X-ray tray as used at a security check at an airport;
- Figure 9: shows a schematic view of a compressed state in which the paper and/or polymer layer is compressed within an protective cover; and
- Figure 10: shows a schematic view of the method for security inspection of baggage and/or personal items.

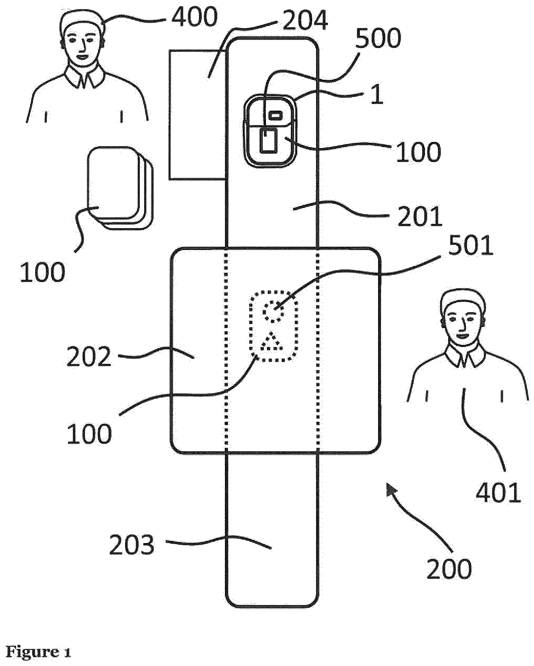

Figure 1 shows a schematic view of a security check 200 at an airport. A passenger 400 may take an X-ray tray 100 from a staple, places it on the desk 204 and attach the single-use inlay 1 which comprises at least one of the metal organic framework materials as specified herein. Figure 1 shows the situation of the next step, wherein the X-ray tray 100 with the attached single-use inlay 1 and containing personal items 500 on said inlay 1 is placed on the conveyor belt 201 that goes into the X-ray baggage scanner 202. A security officer 401 scans another X-ray tray 100 comprising baggage 501 using X-rays. The single-use inlay is not visible as X-rays are not impeded by the single-use inlay of this embodiment. A leaving conveyor belt 203 may transport each X-ray tray 100 out of said X-ray baggage scanner.

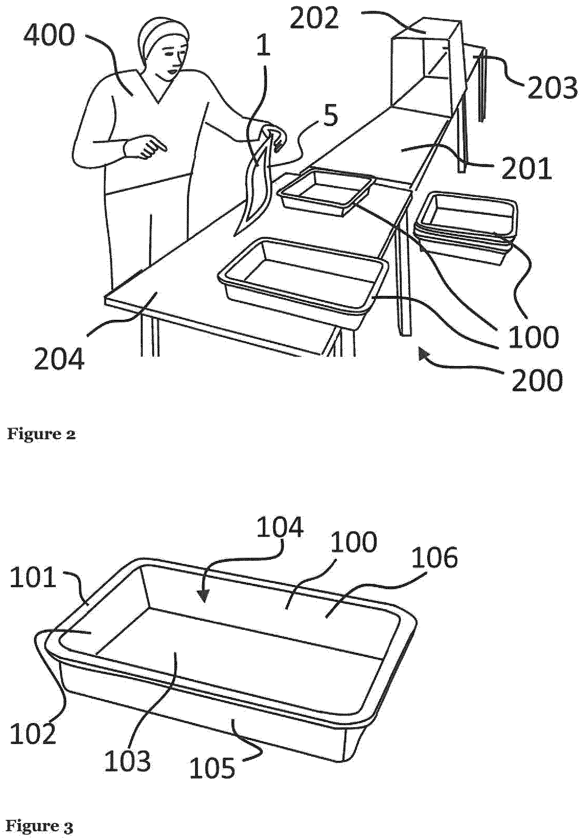

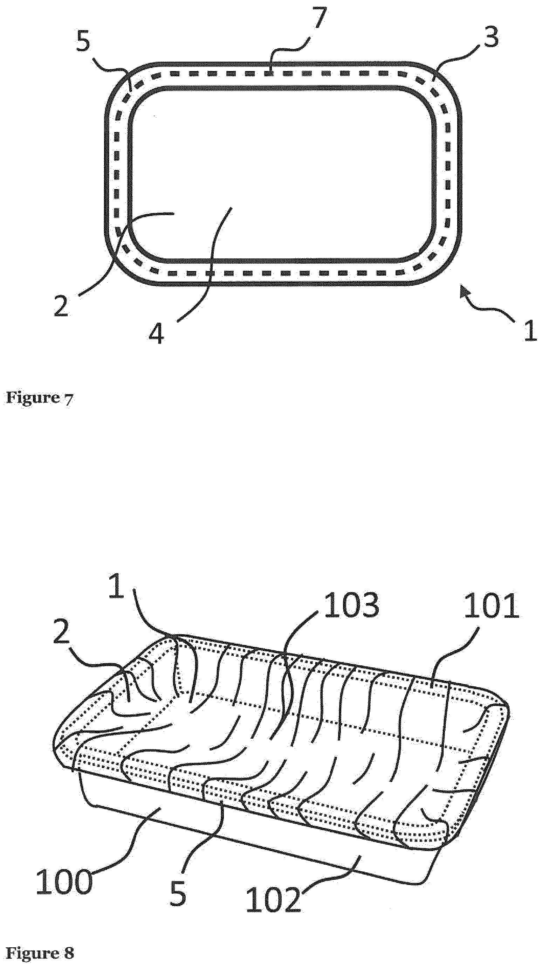

Figure 2 shows a perspective view of a security check 200 at an airport, wherein a passenger 400 is shown, who starts to attach a single-use inlay 1 having an essentially circumferential fringe area 5 to the foremost X-ray tray 100. During this procedure, the X-ray tray 100 may be placed on a table 204. Once the single-use inlay 1 is attached and baggage and/or personal items have been filled into the X-ray tray 100, it is transported through the X-ray baggage scanner 202 using conveyor belts 201 and 203. In Figure 7 it can be seen how the single-use inlay 1 looks like once it has been attached by said passenger 400.

Figure 3 shows a perspective view of an X-ray tray 100 having side walls 102, a bottom 103 and a protruding circumferential edge 101. Said side walls 102 and the bottom 103 define a deposition area 104. The X-ray tray 100 has an exterior side 105 and an interior side 106.

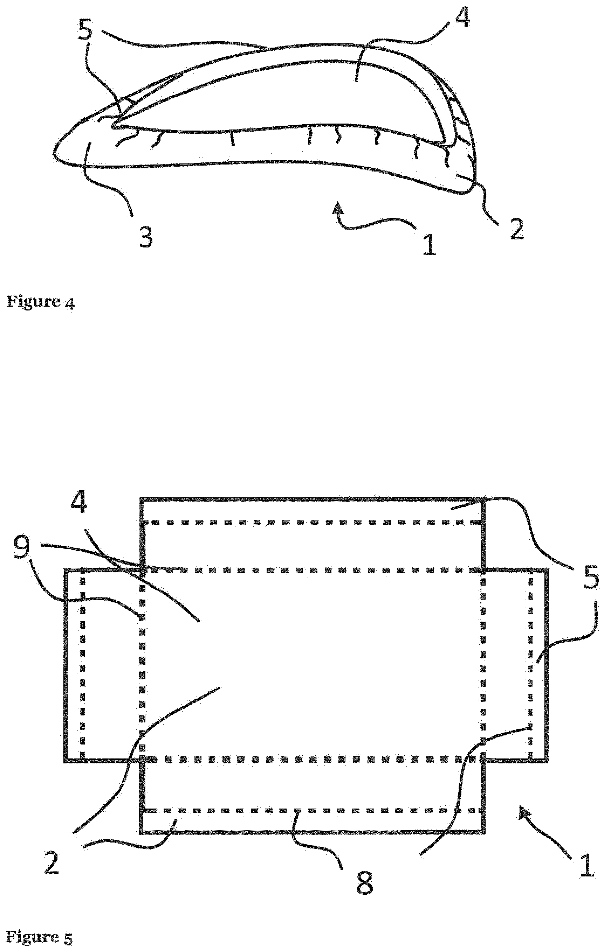

Figure 4 shows a perspective view of a single-use inlay 1, according to the invention, which is decompressed and detached from any X-ray tray. Said detachable single-use inlay 1 for an X-ray tray comprises a polymer layer 2 having an outer side 3 and an inner side 4, wherein the polymer layer 2 has an essentially circumferential fringe area 5 adapted to grasp and/or cover the edges of an X-ray tray as shown in Figure 3. This embodiment may comprise an elastic polymer layer.

Figure 5 shows a schematic view of a single-use inlay which is decompressed and detached from any X-ray tray. Said detachable single-use inlay 1 for an X-ray tray comprises a paper layer 2 having an outer side (not shown) and an opposing inner side 4, wherein the paper layer 2 has an essentially circumferential fringe area 5 adapted to grasp and/or cover the edges of an X-ray tray as shown in Figure 3. Within the embodiment of figure 5, folding lines 9 separate the bottom from the side walls and folding lines 8 define the essentially circumferential fringe area 5. This embodiment is non-elastic.

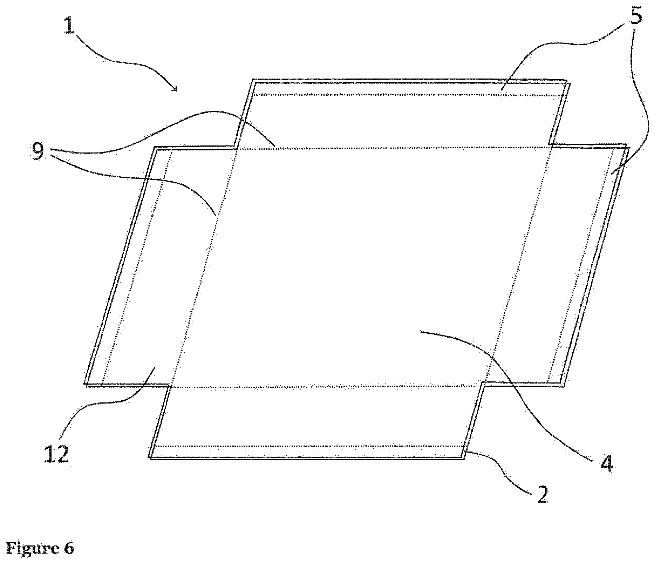

Figure 6 shows a schematic view of a single-use inlay which is decompressed and detached from any X-ray tray. Said detachable single-use inlay 1 for an X-ray tray comprises a paper layer 2 having an outer side (not shown) and an opposing inner side 4 and a MOF layer 12 on top of the paper layer 2. Both layers, the paper layer 2 and the MOF layer 12, have an essentially circumferential fringe area 5 adapted to grasp and/or cover the edges of an X-ray tray as shown in Figure 3. Within the embodiment of figure 5, folding lines 9 separate the bottom from the side walls and folding lines 8 define the essentially circumferential fringe area 5.

Figure 7 shows a schematic view of a single-use inlay 1 which is decompressed and detached from any X-ray tray. Said detachable single-use inlay 1 for an X-ray tray comprises a polymer layer 2 having an outer side 3 and an inner side 4, wherein the polymer layer 2 has an essentially circumferential fringe area 5 adapted to grasp and/or cover the edges of an X-ray tray as shown in Figure 3. Said essentially circumferential fringe area 5 comprises an elastic band 7, which is integrated into the fringe area.

Figure 8 shows a perspective view of a detachable single-use inlay 1 within an X-ray tray 100, wherein the polymer layer 2 has an essentially circumferential fringe area 5 that grasps and covers the edge 101 of said X-ray tray 100. Said X-ray tray 100 has side walls 102, a bottom 103 and a protruding circumferential edge 101.

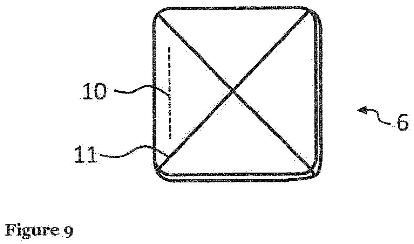

Figure 9 shows a perspective view of a protective cover 6 in which the paper and/or polymer layer of the single-use inlay 1 may be folded or crumpled in a compressed state, e.g. compressed by removing all air from within the protective cover 6. The protective cover 6 may be a bag containing the paper and/or polymer layer on the inside. The protective cover 6 may comprise welding seams 11. It may also comprise weakened zones 10 for opening the protective cover 6.

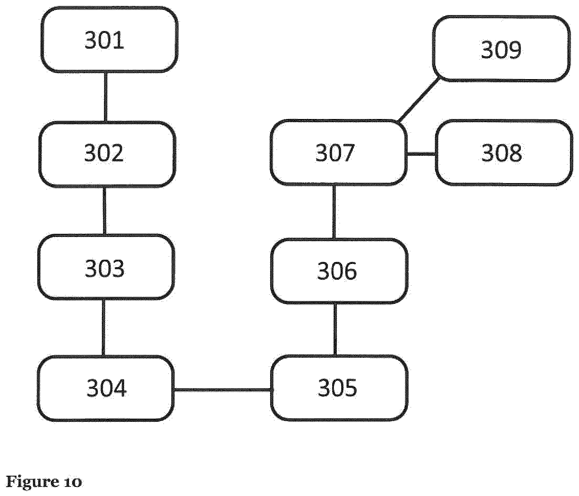

Figure 10 shows a schematic view of the method for security inspection of baggage and/or personal items according to the disclosure. Said method comprises the steps of 301 providing an X-ray tray having a deposition area; 302 attaching a single-use inlay to said X-ray tray to cover said deposition area, 303 putting the baggage and/or personal items onto the single-use inlay, in particular without direct contact to the X-ray tray; 304 X-ray scanning said baggage and/or personal items disposed in said X-ray tray, wherein the X-ray tray is moved by at least one belt conveyor into and out of the scanning area; 305 removing the baggage and/or personal items from said single-use inlay; 306 detaching said single-use inlay from the X-ray tray; 307 disposing of said single-use inlay, in particular in a waste container; and 308 burning said single-use inlay or 309 recycling said single-use inlay.

The features of the disclosure disclosed in the above description, the claims and the drawings can be essential, both individually and in any combination, to implement the disclosure in its various embodiments, wherein the scope of the invention is solely defined by the appended claims.

## Claims

1. Method for security inspection of baggage and/or personal items (500, 501), the method comprising the steps of:
a. providing an X-ray tray (100) having a deposition area (104);
b. attaching an single-use inlay (1) to said X-ray tray (1) to cover said deposition area (104), said single-use inlay comprising a paper and/or polymer layer (2) having an outer side (3) and an inner side (4), ;
c. putting the baggage and/or personal items (500, 501) onto the single-use inlay (1);
d. X-ray scanning said baggage and/or personal items (500, 501) disposed in said X-ray tray (100);
e. removing the baggage and/or personal items (500, 501) from said single-use inlay (1); and
f. detaching said single-use inlay (1) from said X-ray tray (100),
**characterized in that**
the inlay comprises metal organic framework (MOF) material,
wherein said metal organic framework (MOF) material is selected from the group consisting of [Zn₂(bpdc)₂(bpee)], [Zn(dcbpy)(DMF)]·DMF, [Zn₄O(cpi)₂(H₂0)₃] 3DMA·3EtOH·6H₂0, Zn₃(ccmpb)₂(bib), [Zn₃(tdpat)(H₂0)₃], Zn₃(btc)₂, [Zn₂(fdc)₂(bpee)₂(H₂0)]ₙ·2H₂0, [Zn₃(bpdc)₃(bpy)] 4DMF·H₂0, [Zn₂(hfdc)₂(bpy)xDMA], [(CH₃)NH₂]₄[Cd₃(H₂phhc)], [Cd₂(tipb)₂(btc)Cl], [Cd(tipb)(tdc)], [Cd(tipb)(fdc)], [Cd₃(ttpb)₂(H₂0)₆] 6DMF, [Tb(1,3,5-btc)]ₙ, [Tb(hbttc)(H₂0)₄] H₂0, [Eu₂(mfda)₂(HCOO)₂(H₂0)e·H₂0], Eu₃(mfda)₄(NO₃)(DMF)₃, Fe-MIL-88B-NH₂, [Cu(adp)(BIB)H₂0]ₙ, MIL-53-Cr, [Co(pbda)(bpy) 2H₂0]ₙ and mixtures thereof.

2. Method for security inspection according to claim 1, wherein
in step d. inspecting the inlay is used to prevent the transport of explosives or other hazardous compound, chemical agents, toxins and/or drugs.

3. Method for security inspection according to claim 1 or 2, wherein
said metal organic framework material is provided on said outer side (3) and/or on said inner side (4), in particular on said outer side (3), by way of printing, in particular using a transparent dye, or wherein
said paper and/or polymer layer (2) is provided on its outer side (3) and/or on its inner side (4), in particular on its outer side (3), with another layer, in particular polymer layer, comprising said at least one metal organic framework material, or wherein
said paper and/or polymer layer (2) is provided on its outer side (3) and/or on its inner side (4), in particular on its outer side (3), with an, in particular transparent, coating comprising said at least one metal organic framework material, or wherein said paper and/or polymer layer (2) is provided on its outer side (3) and/or on its inner side (4), in particular on its outer side (3), with an, in particular transparent, sticker comprising said at least one metal organic framework material.

4. Method for security inspection according to claim 3, wherein
said metal organic framework material is provided on said outer side (3) and/or on said inner side (4), in particular on said outer side (3), by way of printing, in particular using a transparent dye, wherein a primer is applied under the printing containing the MOFs and/or a protective film is applied over the printing containing the MOFs, adapted and arranged not to interact with the MOFs or wherein
said paper and/or polymer layer (2) is provided on its outer side (3) and/or on its inner side (4), in particular on its outer side (3), with an, in particular transparent, coating comprising said at least one metal organic framework, wherein a primer is applied under the coating containing the MOFs and/or a protective film is applied over the coating containing the MOFs, adapted and arranged not to interact with the MOFs.

5. Method for security inspection according to any of the preceding claims, wherein the at least one metal organic framework material once it has captured an explosive, any other hazardous compound, a chemical agent, a toxin or a drug is adapted and arranged to provide a color signal under visible, UV or IR light.

6. Method for security inspection according to any of the preceding claims, wherein the at least one metal organic framework (MOF) material is a luminescent metal organic framework (LMOF) material.

7. Method for security inspection according to any of the preceding claims, wherein the metal organic framework (MOF) material is arranged and adapted for the detection of NO₂-containing explosives or peroxide based explosives, in particular TATB.

8. Method for security inspection according to any of the preceding claims, wherein the NO₂-containing explosive is selected from the group consisting of TNT, DNT, RDX, PETN, DMNP, HMX and nitrocellulose.

9. Method for security inspection according to any of the preceding claims, wherein the single-use inlay (1) is an unused single-use inlay (1).

10. Method for security inspection according to any of the preceding claims, wherein the paper and/or polymer layer (2) has an essentially circumferential fringe area (5) adapted to grasp and/or cover the edges (101) of said X-ray tray (100).

11. Method for security inspection according to any of the preceding claims, wherein said metal organic framework (MOF) material is [Zn₂(bpdc)₂(bpee)] and/or Fe-MIL-88B-NH₂.

12. Method for security inspection according to any of the preceding claims, wherein the inlay comprises said metal organic framework (MOF) material on said outer side (3) and/or on said inner side (4), in particular on said outer side (3).

13. Method for security inspection according to any of the preceding claims, wherein in step c. the baggage and/or personal items (500, 501) are put onto the single-use inlay (1) without direct contact to the X-ray tray (100).

14. Method for security inspection according to any of the preceding claims, wherein in step d. said baggage and/or personal items (500, 501) disposed in said X-ray tray (100) are X-ray scanned wherein the X-ray tray (100) is moved by at least one belt conveyor (201, 203) into and out of the scanning area (202) and/or, in particular and, the inlay is inspected as to changes in appearance.

15. Sheet material, in particular detachable single-use inlay (1), suitable for being placed in an X-ray tray, comprising a metal organic framework (MOF) material selected from the group consisting of [Zn₂(bpdc)₂(bpee)], [Zn(dcbpy)(DMF)]·DMF, [Zn₄O(cpi)₂(H₂0)₃] 3DMA·3EtOH·6H₂0, Zn₃(ccmpb)₂(bib), [Zn₃(tdpat)(H₂0)₃], Zn₃(btc)₂, [Zn₂(fdc)₂(bpee)₂(H₂0)]ₙ·2H₂0, [Zn₃(bpdc)₃(bpy)] 4DMF·H₂0, [Zn₂(hfdc)₂(bpy) xDMA], [(CH₃)NH₂]₄[Cd₃(H₂phhc)], [Cd₂(tipb)₂(btc)Cl], [Cd(tipb)(tdc)], [Cd(tipb)(fdc)], [Cd₃(ttpb)₂(H₂0)₆] 6DMF, [Tb(1,3,5-btc)]ₙ, [Tb(hbttc)(H₂0)₄] H₂0, [Eu₂(mfda)₂(HCOO)₂(H₂0)e·H₂0], Eu₃(mfda)₄(NO₃)(DMF)₃, Fe-MIL-88B-NH₂, [Cu(adp)(BIB)H₂0]ₙ, MIL-53-Cr, [Co(pbda)(bpy) 2H₂0]ₙ and mixtures thereof.

16. Sheet material, in particular detachable single-use inlay, according to claim 15, wherein
the metal organic framework (MOF) material is [Zn₂(bpdc)₂(bpee)] and/or Fe-MIL-88B-NH₂.

17. Sheet material, in particular detachable single-use inlay, according to claim 15 or 16, wherein
said metal organic framework (MOF) material is on one or both sides of said sheet.

18. Kit of parts comprising a detachable single-use inlay (1) according to any of claims 15 to 17 and an X-ray tray (100),
the detachable single-use inlay (1) comprising a paper and/or polymer layer (2) having an outer side (3) and an inner side (4),
wherein at least one metal organic framework (MOF) material is provided on said outer side (3) and/or on said inner side (4).

19. Kit of parts according to claim 18, wherein
the polymer layer (2) comprises or is a polymer foil made of polyethylene or polypropylene or an ethylene copolymer or a propylene copolymer, preferably chlorinated polyethylene or chlorinated polypropylene.

20. Kit of parts according to claim 18 or 19, wherein
the paper and/or polymer layer (2) is transparent for X-rays and/or visible light.

21. Kit of parts according to any of claims 18 to 20, wherein
said X-ray tray is adapted for a security check (200) at an airport or other public or private facility.

22. Kit of parts according to any of claims 18 to 21, wherein
the detachable single-use inlay (1) is a flexible paper and/or polymer layer (2).

23. Kit of parts according to any of claims 18 to 22, wherein
said at least one metal organic framework (MOF) material is provided on the outer side (3) of the detachable single-use inlay (1).

24. Kit of parts according to any of claims 18 to 23, wherein
said metal organic framework (MOF) material is [Zn₂(bpdc)₂(bpee)] and/or Fe-MIL-88B-NH₂.

25. Use of a Kit of parts according to any of the claims 18 to 24 and/or of a sheet material, in particular detachable single-use inlay, according to any of the claims 15 to 17 to prevent the transfer of pathogenic agents from an X-ray tray of a security check to baggage and/or personal items or to the user of the X-ray tray and/or to detect explosives, other hazardous compounds, chemical agents or toxines and/or drugs with the baggage and/or personal items placed on the sheet material, in particular the detachable single-use inlay.

## Patentansprüche

1. Verfahren zur Sicherheitsinspektion von Gepäck und/oder persönlichen Gegenständen (500, 501), wobei das Verfahren die folgenden Schritte umfasst:
a. Bereitstellen eines Röntgentrays (100) mit einem Ablagebereich (104);
b. Anbringen einer Einwegeinlage (1) an dem Röntgentrays (1), um den Ablagebereich (104) abzudecken, wobei die Einwegeinlage eine Papier- und/oder Polymerschicht (2) mit einer Außenseite (3) und einer Innenseite (4) umfasst;
c. Legen des Gepäcks und/oder der persönlichen Gegenstände (500, 501) auf die Einwegeinlage (1);
d. Röntgen-Scannen des Gepäcks und/oder der persönlichen Gegenstände (500, 501), die in dem Röntgentray (100) angeordnet sind;
e. Entfernen des Gepäcks und/oder der persönlichen Gegenstände (500, 501) von der Einwegeinlage (1); und
f. Lösen der Einwegeinlage (1) von dem Röntgentray (100),
**dadurch gekennzeichnet, dass**
die Einlage ein metallorganisches Gerüstverbindungsmaterial (MOF) umfasst, wobei das metallorganische Gerüstverbindungsmaterial (MOF) ausgewählt ist aus der Gruppe bestehend aus [Zn₂(bpdc)₂(bpee)], [Zn(dcbpy)(DMF)]·DMF, [Zn₄O(cpi)₂(H₂0)₃] 3DMA·3EtOH·6H₂0, Zn₃(ccmpb)₂(bib), [Zn₃(tdpat)(H₂0)₃], Zn₃(btc)₂, [Zn₂(fdc)₂(bpee)₂(H₂0)]ₙ·2H₂0, [Zn₃(bpdc)₃(bpy)] 4DMF·H₂0, [Zn₂(hfdc)₂(bpy)xDMA], [(CH₃)NH₂]₄[Cd₃(H₂phhc)], [Cd₂(tipb)₂(btc)Cl], [Cd(tipb)(tdc)], [Cd(tipb)(fdc)], [Cd₃(ttpb)₂(H₂0)₆] 6DMF, [Tb(1,3,5-btc)]ₙ, [Tb(hbttc)(H₂0)₄] H₂0, [Eu₂(mfda)₂(HCOO)₂(H₂0)e·H₂0], Eu₃(mfda)₄(NO₃)(DMF)₃, Fe-MIL-88B-NH₂, [Cu(adp)(BIB)H₂0]ₙ, MIL-53-Cr, [Co(pbda)(bpy)2H₂0]ₙ und Mischungen davon.

2. Verfahren zur Sicherheitsinspektion nach Anspruch 1, wobei
in Schritt d. die Inspektion der Einlage verwendet wird, um den Transport von Sprengstoffen oder anderen gefährlichen Verbindungen, chemischen Stoffen, Toxinen und/oder Drogen zu verhindern.

3. Verfahren zur Sicherheitsinspektion nach Anspruch 1 oder 2, wobei
das metallorganische Gerüstverbindungsmaterial auf der Außenseite (3) und/oder auf der Innenseite (4), insbesondere auf der Außenseite (3), durch Drucken, insbesondere unter Verwendung eines transparenten Farbstoffs, bereitgestellt wird, oder wobei
die Papier- und/oder Polymerschicht (2) auf ihrer Außenseite (3) und/oder auf ihrer Innenseite (4), insbesondere auf ihrer Außenseite (3), mit einer anderen Schicht, insbesondere Polymerschicht, bereitgestellt wird, die das mindestens eine metallorganische Gerüstverbindungsmaterial umfasst, oder wobei
die Papier- und/oder Polymerschicht (2) auf ihrer Außenseite (3) und/oder auf ihrer Innenseite (4), insbesondere auf ihrer Außenseite (3), mit einer, insbesondere transparenten, Beschichtung bereitgestellt wird, die das mindestens eine das metallorganische Gerüstverbindungsmaterial umfasst, oder wobei
die Papier- und/oder Polymerschicht (2) auf ihrer Außenseite (3) und/oder auf ihrer Innenseite (4), insbesondere auf ihrer Außenseite (3), mit einem, insbesondere transparenten, Aufkleber bereitgestellt wird, der das mindestens eine das metallorganische Gerüstverbindungsmaterial umfasst.

4. Verfahren zur Sicherheitsinspektion nach Anspruch 3, wobei
das metallorganische Gerüstverbindungsmaterial auf der Außenseite (3) und/oder auf der Innenseite (4), insbesondere auf der Außenseite (3), durch Drucken, insbesondere unter Verwendung eines transparenten Farbstoffs, bereitgestellt wird, wobei eine Grundierung unter dem Druck, der die MOFs enthält, aufgebracht wird und/oder ein Schutzfilm über dem Druck, der die MOFs enthält, aufgebracht wird, der dafür ausgelegt und angeordnet ist, nicht mit den MOFs zu interagieren, oder wobei
die Papier- und/oder Polymerschicht (2) auf ihrer Außenseite (3) und/oder auf ihrer Innenseite (4), insbesondere auf ihrer Außenseite (3), mit einer, insbesondere transparenten, Beschichtung bereitgestellt wird, die das mindestens eine metallorganische Gerüstverbindungsmaterial umfasst, wobei eine Grundierung unter der Beschichtung, die die MOFs enthält, aufgebracht wird und/oder ein Schutzfilm über der Beschichtung, die die MOFs enthält, aufgebracht wird, der dafür ausgelegt und angeordnet ist, nicht mit den MOFs zu interagieren.

5. Verfahren zur Sicherheitsinspektion nach einem der vorhergehenden Ansprüche, wobei das mindestens eine metallorganische Gerüstverbindungsmaterial, sobald es einen Sprengstoff, eine andere gefährliche Verbindung, einen chemischen Stoff, ein Toxin oder eine Droge eingefangen hat, dafür ausgelegt und angeordnet ist, ein Farbsignal unter sichtbarem, UV- oder IR-Licht bereitzustellen.

6. Verfahren zur Sicherheitsinspektion nach einem der vorhergehenden Ansprüche, wobei das mindestens eine metallorganische Gerüstverbindungsmaterial (MOF) ein lumineszierendes metallorganisches Gerüstverbindungsmaterial (LMOF) ist.

7. Verfahren zur Sicherheitsinspektion nach einem der vorhergehenden Ansprüche, wobei das metallorganische Gerüstverbindungsmaterial (MOF) zum Nachweis von NO₂-haltigen Sprengstoffen oder Sprengstoffen auf Peroxidbasis, insbesondere TATB, angeordnet und angepasst ist.

8. Verfahren zur Sicherheitsinspektion nach einem der vorhergehenden Ansprüche, wobei der NO₂-haltige Sprengstoff ausgewählt ist aus der Gruppe bestehend aus TNT, DNT, RDX, PETN, DMNP, HMX und Nitrocellulose.

9. Verfahren zur Sicherheitsinspektion nach einem der vorhergehenden Ansprüche, wobei die Einwegeinlage (1) eine ungebrauchte Einwegeinlage (1) ist.

10. Verfahren zur Sicherheitsinspektion nach einem der vorhergehenden Ansprüche, wobei die Papier- und/oder Polymerschicht (2) einen im wesentlichen umlaufenden Randbereich (5) aufweist, der angepasst ist, um die Ränder (101) des Röntgentrays (100) zu ergreifen und/oder abzudecken.

11. Verfahren zur Sicherheitsinspektion nach einem der vorhergehenden Ansprüche, wobei das metallorganische Gerüstverbindungsmaterial (MOF) [Zn₂(bpdc)₂(bpee)] und/oder Fe-MIL-88B-NH₂ ist.

12. Verfahren zur Sicherheitsinspektion nach einem der vorhergehenden Ansprüche, wobei die Einlage das metallorganische Gerüstverbindungsmaterial (MOF) auf der Außenseite (3) und/oder auf der Innenseite (4), insbesondere auf der Außenseite (3), umfasst.

13. Verfahren zur Sicherheitsinspektion nach einem der vorhergehenden Ansprüche, wobei in Schritt c. das Gepäck und/oder die persönlichen Gegenstände (500, 501) auf die Einwegeinlage (1) ohne direkten Kontakt mit dem Röntgentray (100) gelegt werden.

14. Verfahren zur Sicherheitsinspektion nach einem der vorhergehenden Ansprüche, wobei in Schritt d. das Gepäck und/oder die persönlichen Gegenstände (500, 501), die in dem Röntgentray (100) angeordnet sind, Röntgen-gescannt werden, wobei das Röntgentray (100) durch mindestens einen Bandförderer (201, 203) in den Scanbereich (202) hinein und aus diesem heraus bewegt wird und/oder, insbesondere und, die Einlage auf Veränderungen im Aussehen hin inspiziert wird.

15. Blattmaterial, insbesondere abnehmbare Einwegeinlage (1), die geeignet ist, in einem Röntgentray platziert zu werden, umfassend ein metallorganisches Gerüstverbindungsmaterial (MOF), ausgewählt aus der Gruppe bestehend aus [Zn₂(bpdc)₂(bpee)], [Zn(dcbpy)(DMF)]·DMF, [Zn₄O(cpi)₂(H₂0)₃]3DMA·3EtOH·6H₂0, Zn₃(ccmpb)₂(bib), [Zn₃(tdpat)(H₂0)₃], Zn₃(btc)₂, [Zn₂(fdc)₂(bpee)₂(H₂0)]ₙ·2H₂0, [Zn₃(bpdc)₃(bpy)]4DMF-H₂0, [Zn₂(hfdc)₂(bpy)xDMA], [(CH₃)NH₂]₄[Cd₃(H₂phhc)], [Cd₂(tipb)₂(btc)Cl], [Cd(tipb)(tdc)], [Cd(tipb)(fdc)], [Cd₃(ttpb)₂(H₂0)₆]6DMF, [Tb(1,3,5-btc)]ₙ, [Tb(hbttc)(H₂0)₄]H₂0, [Eu₂(mfda)₂(HCOO)₂(H₂0)e·H₂0], Eu₃(mfda)₄(NO₃)(DMF)₃, Fe-MIL-88B-NH₂, [Cu(adp)(BIB)H₂0]ₙ, MIL-53-Cr, [Co(pbda)(bpy)2H₂0]ₙ und Mischungen davon.

16. Blattmaterial, insbesondere abnehmbare Einwegeinlage, nach Anspruch 15, wobei das metallorganische Gerüstverbindungsmaterial (MOF) [Zn2(bpdc)2(bpee)] und/oder Fe-MIL-88B-NH2 ist.

17. Blattmaterial, insbesondere abnehmbare Einwegeinlage, nach Anspruch 15 oder 16, wobei das metallorganische Gerüstverbindungsmaterial (MOF) auf einer oder beiden Seiten des Blatts ist.

18. Kit of parts, umfassend eine abnehmbare Einwegeinlage (1) nach einem der Ansprüche 15 bis 17 und einen Röntgentray (100),
wobei die abnehmbare Einwegeinlage (1) eine Papier- und/oder Polymerschicht (2) mit einer Außenseite (3) und einer Innenseite (4) umfasst,
wobei das mindestens eine metallorganische Gerüstverbindungsmaterial (MOF) auf der Außenseite (3) und/oder auf der Innenseite (4) bereitgestellt ist.

19. Kit of parts nach Anspruch 18, wobei
die Polymerschicht (2) eine Polymerfolie umfasst oder ist, die aus Polyethylen oder Polypropylen oder einem Ethylencopolymer oder einem Propylencopolymer, vorzugsweise chloriertem Polyethylen oder chloriertem Polypropylen, hergestellt ist.

20. Kit of parts nach Anspruch 18 oder 19, wobei
die Papier- und/oder Polymerschicht (2) für Röntgenstrahlen und/oder sichtbares Licht transparent ist.

21. Kit of parts nach einem der Ansprüche 18 bis 20, wobei
das Röntgentray für eine Sicherheitsprüfung (200) an einem Flughafen oder einer anderen öffentlichen oder privaten Einrichtung ausgelegt ist.

22. Kit of parts nach einem der Ansprüche 18 bis 21, wobei
die abnehmbare Einwegeinlage (1) eine flexible Papier- und/oder Polymerschicht (2) ist.

23. Kit of parts nach einem der Ansprüche 18 bis 22, wobei
die mindestens eine metallorganische Gerüstverbindung (MOF) auf der Außenseite (3) der abnehmbaren Einwegeinlage (1) bereitgestellt ist.

24. Kit of parts nach einem der Ansprüche 18 bis 23, wobei
das metallorganische Gerüstverbindungsmaterial (MOF) [Zn₂(bpdc)₂(bpee)] und/oder Fe-MIL-88B-NH₂ ist.

25. Verwendung eines Kit of parts nach einem der Ansprüche 18 bis 24 und/oder eines Blattmaterials, insbesondere einer abnehmbaren Einwegeinlage, nach einem der Ansprüche 15 bis 17, um die Übertragung von pathogenen Stoffen von einem Röntgentray einer Sicherheitsprüfung auf Gepäck und/oder persönliche Gegenstände oder auf den Benutzer des Röntgentrays zu verhindern und/oder um Sprengstoffe, andere gefährliche Verbindungen, chemische Stoffe oder Toxine und/oder Drogen zu erkennen, wobei das Gepäck und/oder die persönlichen Gegenstände auf dem Blattmaterial, insbesondere der abnehmbaren Einwegeinlage, platziert sind.

## Revendications

1. Procédé d'inspection de sécurité de bagages et/ou d'effets personnels (500, 501), le procédé comprenant les étapes:
a. fournir d'un plateau à rayons X (100) ayant une zone de dépôt (104);
b. fixer un inlay à usage unique (1) audit plateau à rayons X (1) pour couvrir ladite zone de dépôt (104), ledit insert à usage unique comprenant une couche de papier et/ou de polymère (2) ayant un côté extérieur (3) et un côté intérieur (4);
c. placer les bagages et/ou les effets personnels (500, 501) sur l'insert à usage unique (1);
d. balayer par rayons X lesdits bagages et/ou effets personnels (500, 501) disposés dans ledit plateau à rayons X (100);
e. retirer les bagages et/ou effets personnels (500, 501) dudit insert à usage unique (1); et
f. détacher ledit insert à usage unique (1) dudit plateau à rayons X (100),
**caractérisé en ce que**
l'insert comprend un matériau de structure organométallique (MOF),
dans lequel ledit matériau de structure organométallique (MOF) est choisi dans le groupe constitué de [Zn₂(bpdc)₂(bpee)], [Zn(dcbpy)(DMF)]·DMF, [Zn₄O(cpi)₂(H₂0)₃] 3DMA·3EtOH·6H₂0, Zn₃(ccmpb)₂(bib), [Zn₃(tdpat)(H₂0)₃], Zn₃(btc)₂, [Zn₂(fdc)₂(bpee)₂(H₂0)]ₙ·2H₂0, [Zn₃(bpdc)₃(bpy)] 4DMF·H₂0, [Zn₂(hfdc)₂(bpy)xDMA], [(CH₃)NH₂]₄[Cd₃(H₂phhc)], [Cd₂(tipb)₂(btc)Cl], [Cd(tipb)(tdc)], [Cd(tipb)(fdc)], [Cd₃(ttpb)₂(H₂0)₆] 6DMF, [Tb(1,3,5-btc)]ₙ, [Tb(hbttc)(H₂0)₄] H₂0, [Eu₂(mfda)₂(HCOO)₂(H₂0)e·H₂0], Eu₃(mfda)₄(NO₃)(DMF)₃, Fe-MIL-88B-NH₂, [Cu(adp)(BIB)H₂0]ₙ, MIL-53-Cr, [Co(pbda)(bpy)2H₂0]ₙ et des mélanges de ceux-ci.

2. Procédé d'inspection de sécurité selon la revendication 1, dans lequel à l'étape d., l'inspection de l'insert est utilisée pour empêcher le transport d'explosifs ou d'autres composés dangereux, agents chimiques, toxines et/ou drogues.

3. Procédé d'inspection de sécurité selon la revendication 1 ou 2, dans lequel ledit matériau de structure organométallique est fourni sur ledit côté extérieur (3) et/ou sur ledit côté intérieur (4), en particulier sur ledit côté extérieur (3), par impression, en particulier en utilisant un colorant transparent, ou dans lequel ladite couche de papier et/ou de polymère (2) est fournie sur son côté extérieur (3) et/ou sur son côté intérieur (4), en particulier sur son côté extérieur (3), avec une autre couche, en particulier une couche de polymère, comprenant ledit au moins un matériau de structure organométallique, ou dans lequel
ladite couche de papier et/ou de polymère (2) est fournie sur son côté extérieur (3) et/ou sur son côté intérieur (4), en particulier sur son côté extérieur (3), avec un revêtement, en particulier transparent, comprenant ledit au moins un matériau de structure organométallique, ou dans lequel
ladite couche de papier et/ou de polymère (2) est fournie sur son côté extérieur (3) et/ou sur son côté intérieur (4), en particulier sur son côté extérieur (3), avec un autocollant, en particulier transparent, comprenant ledit au moins un matériau de structure organométallique.

4. Procédé d'inspection de sécurité selon la revendication 3, dans lequel
ledit matériau de structure organométallique est fourni sur ledit côté extérieur (3) et/ou sur ledit côté intérieur (4), en particulier sur ledit côté extérieur (3), par impression, en particulier en utilisant un colorant transparent, dans lequel un apprêt est appliqué sous l'impression contenant les MOF et/ou un film protecteur est appliqué sur l'impression contenant les MOF, adapté et agencé pour ne pas interagir avec les MOF
ou dans lequel
ladite couche de papier et/ou de polymère (2) est fournie sur son côté extérieur (3) et/ou sur son côté intérieur (4), en particulier sur son côté extérieur (3), avec un revêtement, en particulier transparent, comprenant ladite au moins une structure organométallique, dans lequel un apprêt est appliqué sous le revêtement contenant les MOF et/ou un film protecteur est appliqué sur le revêtement contenant les MOF, adapté et agencé pour ne pas interagir avec les MOF.

5. Procédé d'inspection de sécurité selon l'une quelconque des revendications
précédentes, dans lequel
l'au moins un matériau de structure organométallique, une fois qu'il a capturé un explosif, tout autre composé dangereux, un agent chimique, une toxine ou une drogue, est adapté et agencé pour fournir un signal de couleur sous lumière visible, UV ou IR.

6. Procédé d'inspection de sécurité selon l'une quelconque des revendications
précédentes, dans lequel
l'au moins un matériau de structure organométallique (MOF) est un matériau de structure organométallique luminescent (LMOF).

7. Procédé d'inspection de sécurité selon l'une quelconque des revendications
précédentes, dans lequel
le matériau de structure organométallique (MOF) est agencé et adapté pour la détection d'explosifs contenant du NO₂ ou d'explosifs à base de peroxyde, en particulier TATB.

8. Procédé d'inspection de sécurité selon l'une quelconque des revendications
précédentes, dans lequel
l'explosif contenant du NO₂ est choisi dans le groupe constitué de TNT, DNT, RDX, PETN, DMNP, HMX et nitrocellulose.

9. Procédé d'inspection de sécurité selon l'une quelconque des revendications
précédentes, dans lequel
l'insert à usage unique (1) est un insert à usage unique non utilisé (1).

10. Procédé d'inspection de sécurité selon l'une quelconque des revendications
précédentes, dans lequel
la couche de papier et/ou de polymère (2) a une zone de frange essentiellement circonférentielle (5) adaptée pour saisir et/ou couvrir les bords (101) dudit plateau à rayons X (100).

11. Procédé d'inspection de sécurité selon l'une quelconque des revendications
précédentes, dans lequel
ledit matériau de structure organométallique (MOF) est [Zn₂(bpdc)₂(bpee)] et/ou Fe-MIL-88B-NH₂ .

12. Procédé d'inspection de sécurité selon l'une quelconque des revendications
précédentes, dans lequel
l'insert comprend ledit matériau de structure organométallique (MOF) sur ledit côté extérieur (3) et/ou sur ledit côté intérieur (4), en particulier sur ledit côté extérieur (3).

13. Procédé d'inspection de sécurité selon l'une quelconque des revendications
précédentes, dans lequel
à l'étape c. les bagages et/ou les effets personnels (500, 501) sont placés sur l'insert à usage unique (1) sans contact direct avec le plateau à rayons X (100).

14. Procédé d'inspection de sécurité selon l'une quelconque des revendications
précédentes, dans lequel
à l'étape d. lesdits bagages et/ou effets personnels (500, 501) disposés dans ledit plateau à rayons X (100) sont balayés par rayons X dans lequel le plateau à rayons X (100) est déplacé par au moins un convoyeur à bande (201, 203) dans et hors de la zone de balayage (202) et/ou, en particulier et, l'insert est inspecté quant à des changements d'aspect.

15. Matériau en feuille, en particulier insert à usage unique détachable (1), approprié pour être placé dans un plateau à rayons X, comprenant un matériau de structure organométallique (MOF) choisi dans le groupe constitué de [Zn₂(bpdc)₂(bpee)], [Zn(dcbpy)(DMF)]·DMF, [Zn₄O(cpi)₂(H₂0)₃] 3DMA·3EtOH·6H₂0, Zn₃(ccmpb)₂(bib), [Zn₃(tdpat)(H₂0)₃], Zn₃(btc)₂, [Zn₂(fdc)₂(bpee)₂(H₂0)]ₙ·2H₂0, [Zn₃(bpdc)₃(bpy)] 4DMF·H₂0, [Zn₂(hfdc)₂(bpy) xDMA], [(CH₃)NH₂]₄[Cd₃(H₂phhc)], [Cd₂(tipb)₂(btc)Cl], [Cd(tipb)(tdc)], [Cd(tipb)(fdc)], [Cd₃(ttpb)₂(H₂0)₆] 6DMF, [Tb(1,3,5-btc)]ₙ, [Tb(hbttc)(H₂0)₄] H₂0, [Eu₂(mfda)₂(HCOO)₂(H₂0)e·H₂0], Eu₃(mfda)₄(NO₃)(DMF)₃, Fe-MIL-88B-NH₂, [Cu(adp)(BIB)H₂0]ₙ, MIL-53-Cr, [Co(pbda)(bpy) 2H₂0]ₙ et des mélanges de ceux-ci.

16. Matériau en feuille, en particulier insert à usage unique détachable, selon la revendication 15, dans lequel
le matériau de structure organométallique (MOF) est [Zn₂(bpdc)₂(bpee)] et/ou Fe-MIL-88B-NH₂ .

17. Matériau en feuille, en particulier insert à usage unique détachable, selon la revendication 15 ou 16, dans lequel
ledit matériau de structure organométallique (MOF) est sur un ou les deux côtés de ladite feuille.

18. Kit de pièces comprenant un insert à usage unique détachable (1) selon l'une quelconque des revendications 15 à 17 et un plateau à rayons X (100),
l'insert à usage unique détachable (1) comprenant une couche de papier et/ou de polymère (2) ayant un côté extérieur (3) et un côté intérieur (4),
dans lequel au moins un matériau de structure organométallique (MOF) est prévu sur ledit côté extérieur (3) et/ou sur ledit côté intérieur (4).

19. Kit de pièces selon la revendication 18, dans lequel
la couche de polymère (2) comprend ou est une feuille de polymère constituée de polyéthylène ou de polypropylène ou d'un copolymère d'éthylène ou d'un copolymère de propylène, de préférence de polyéthylène chloré ou de polypropylène chloré.

20. Kit de pièces selon la revendication 18 ou 19, dans lequel
la couche de papier et/ou de polymère (2) est transparente aux rayons X et/ou à la lumière visible.

21. Kit de pièces selon l'une quelconque des revendications 18 à 20, dans lequel ledit plateau à rayons X est adapté pour un contrôle de sécurité (200) dans un aéroport ou une autre installation publique ou privée.

22. Kit de pièces selon l'une quelconque des revendications 18 à 21, dans lequel l'insert à usage unique détachable (1) est une couche de papier et/ou de polymère flexible (2).

23. Kit de pièces selon l'une quelconque des revendications 18 à 22, dans lequel ledit au moins un matériau de structure organométallique (MOF) est prévu sur le côté extérieur (3) de l'insert à usage unique détachable (1).

24. Kit de pièces selon l'une quelconque des revendications 18 à 23, dans lequel ledit matériau de structure organométallique (MOF) est [Zn₂(bpdc)₂(bpee)] et/ou Fe-MIL-88B-NH₂ .

25. Utilisation d'un kit de pièces selon l'une quelconque des revendications 18 à 24 et/ou d'un matériau en feuille, en particulier insert à usage unique détachable, selon l'une quelconque des revendications 15 à 17 pour empêcher le transfert d'agents pathogènes d'un plateau à rayons X d'un contrôle de sécurité à des bagages et/ou des effets personnels ou à l'utilisateur du plateau à rayons X et/ou pour détecter des explosifs, d'autres composés dangereux, agents chimiques ou toxines et/ou drogues avec les bagages et/ou effets personnels placés sur le matériau en feuille, en particulier l'insert à usage unique détachable.
